# FASCICULE DE BREVET EUROPEEN

(11) **EP 0 876 537 B1**
(45) Date de publication et mention de la délivrance du brevet: **12.09.2001**
(21) Numéro de dépôt: 97901122.8
(22) Date de dépôt: 20.01.1997
(51) Int. Cl.: D21H 27/40

(54) **FEUILLE STRATIFIEE A GAUFRAGE MIXTE**
MEHRSCHICHTIGE BAHN MIT KOMBINIERTER PRÄGUNG
LAMINATED SHEET WITH MULTIPLE EMBOSSED PATTERNS

(30) Priorité: 22.01.1996 FR 9600667
(43) Date de publication de la demande: 11.11.1998
(73) Titulaire: Georgia-Pacific France, 68320 Kunheim (FR)
(72) Inventeur: LE PORT, Hervé, F-68170 Rixheim (FR); LAURENT, Pierre, F-68000 Colmar (FR); PERIN, Rémy, F-92400 Sèvres (FR); ROUSSEL, Gilles, F-68000 Colmar (FR)
(74) Mandataire: Cortier, Sophie
(86) Numéro de dépôt international: FR9700104
(87) Numéro de publication internationale: WO9727365

(56) Documents cités:
- EP-A- 0 265 298
- EP-A- 0 564 319
- US-A- 4 320 162

## Description

La présente invention se rapporte au domaine des papiers absorbants à usage sanitaire ou domestique et vise une feuille constituée d'au moins deux plis gaufrés destinée à la réalisation de papier toilette essentiellement, mais aussi de mouchoirs serviettes ou essuie-tout.

Dans l'industrie du papier sanitaire et domestique, on utilise pour la réalisation de ces produits un papier absorbant généralement crêpé, de faible grammage désigné : ouate de cellulose ou tissu ouaté. On profite de la capacité d'allongement de la structure conférée par exemple par le crêpage pour gaufrer la feuille, c'est-à-dire la déformer par endroits de façon permanente et obtenir des protubérances sur une face correspondant à des zones en creux sur l'autre face.

En effet, la tendance de ces dernières années, en ce qui concerne les produits d'hygiène a été de les rendre plus doux, plus moelleux en travaillant leurs caractéristiques d'épaisseur et de résistances, notamment par le gaufrage. Ce dernier permet en outre d'améliorer l'attrait visuel du produit. L'opération de gaufrage s'effectue soit sur du papier à fort taux d'humidité, c'est-à-dire en partie humide de la machine à papier, soit sur du papier à faible taux d'humidité, c'est-à-dire en transformation. La présente invention concerne le papier transformé en partie sèche.

Les motifs de gaufrage les plus répandus sont constitués d'une répétition sur une base géométrique de protubérances élémentaires de faible section transversale et de forme géométrique simple. Un exemple est décrit dans le brevet US 3 414 459 qui porte sur une feuille stratifiée constituée d'une pluralité de feuilles élémentaires, appelées plis, collées ensemble. Les plis sont gaufrés avec une fréquence de répartition des protubérances et une hauteur des protubérances adaptées à la réalisation de produits absorbant l'eau tels que des essuie-tout, le nombre d'éléments allant de 5 à 30 au cm². Par ailleurs, la Demanderesse a développé, pour du papier toilette notamment, des motifs dont le nombre des éléments est supérieur, allant de 30 à 80 au cm². Ces éléments ont nécessairement une surface élémentaire au sommet très faible, inférieure à 1 mm². On obtient pour ces dernières réalisations un aspect qui imite celui d'un produit tissé. Un exemple est décrit dans le brevet EP 426 548. Ce type de gaufrage affecte principalement les caractéristiques liées à l'épaisseur de la feuille. Il présente toutefois un attrait visuel limité.

Dans le but d'améliorer l'impact visuel, on a proposé des motifs présentant une fréquence de répartition beaucoup plus faible par rapport aux motifs précédents - inférieure à 2000 éléments par m² de préférence - et une surface unitaire plus élevée des éléments constituant le motif- les éléments peuvent être inscrits dans un polygone de 2 à 6 cm². Un exemple de réalisation est décrit dans le brevet EP 265 298. Selon ce brevet, les protubérances formant ces éléments sont de section transversale allongée avec des sommets à configuration linéaire. Les courbes ainsi dessinées sont de préférence fermées et donnent aux éléments du motif un aspect molletonné. En outre ces éléments sont relativement espacés ménageant de larges zones lisses dont la douceur n'est donc pas affectée par le gaufrage. Cet ensemble de caractéristiques du motif contribue à conférer au papier des qualités de moelleux et douceur qui sont perçues par le consommateur. Toutefois en contrepartie, l'impact de ce type de motif sur les caractéristiques physiques est limité. Notamment, l'épaisseur est peu altérée. On constate en effet que le rendement de l'opération de gaufrage est plus faible. Il est nécessaire de graver les cylindres à une profondeur relativement importante pour en tirer quelque gain d'épaisseur.

Le brevet EP 0 564 319 décrit une feuille comportant deux ou plusieurs plis dont un au moins présentant des protubérances de différentes hauteurs pour permettre une association à la fois pointe/pointe et « nested ».

L'invention a pour objet la réalisation d'une feuille stratifiées de papier à usage sanitaire ou domestique présentant les qualités de douceur et de moelleux conférées par le type de motif précédent et dont l'épaisseur est accrue.

Cet objectif est atteint avec une feuille stratifiée constituée de deux plis au moins, d'ouate de cellulose ou autre nappe de fibres cellulosiques de grammage compris entre 10 et 40 g/m², gaufrés et assemblés de façon que les protubérances, définissant les motifs de gaufrage, soient disposées vers l'intérieur de la feuille et ménagent entre elles des cavités, les plis étant gaufrés selon des motifs de gaufrage différents, caractérisé en ce que l'un des plis est gaufré selon un premier motif constitué de premières protubérances de surface au sommet inférieure à 1 mm² et dont le nombre est au moins de 30 par cm², et, le second pli est gaufré selon un deuxième motif composé d'éléments de motif constitués de secondes protubérances à sommet de forme linéaire lesdits éléments de motif occupant individuellement une surface de 2 à 6 cm² et étant espacés les uns des autres, le nombre desdits éléments de motif étant inférieur à 2 000 par m².

On constate en effet, grâce à cette combinaison, pour une feuille à deux plis un accroissement d'épaisseur de plus de 10 % par rapport à une feuille réalisée conformément à l'enseignement du brevet EP 265 298 où les deux plis ont été gaufrés séparément selon un motif correspondant au dit deuxième motif de la feuille de l'invention et assemblés et collés par leurs sommets respectifs.

Selon une autre caractéristique le premier pli est gaufré selon un motif dont la densité des protubérances est au moins de 40 par cm².

D'autres caractéristiques apparaîtront à la lecture de la description ci-après d'un mode de réalisation non limitatif de l'invention en se référant aux dessins annexés sur lesquels :
- la figure 1 représente une vue d'une première face de la feuille de l'invention,
- la figure 2 représente une vue de la face opposée à celle de la figure 1,
- la figure 3 représente schématiquement une coupe transversale de la feuille.
- la figure 4 représente schématiquement une installation de gaufrage et d'assemblage.

Selon un mode de réalisation préféré, la feuille de l'invention est constituée de deux plis (10, 20) superposés d'ouate de cellulose. L'ouate de cellulose est un papier crêpé de faible grammage, compris entre 10 et 40 g/m², qui a été séché sur un cylindre chauffé et dont il a été détaché au moyen d'un racle de crêpage.

Les deux plis sont gaufrés avec des motifs différents.

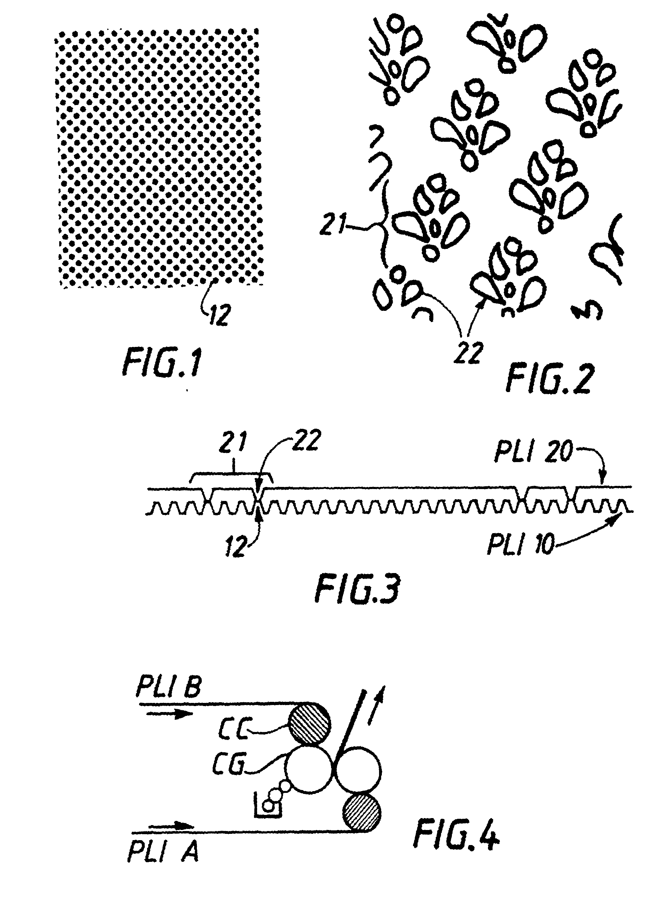

Le premier pli (10) est gaufré selon le type de motif représenté sur la figure 1. Ce premier motif est constitué de premières protubérances (12) réparties uniformément sens marche et sens travers. Il se caractérise par un nombre élevé de protubérances par unité de surface, au moins 30 par cm². Toutefois on obtient un résultat optimum tant sur le plan d'aspect que de gain en épaisseur quand leur nombre est compris entre 40 et 80 par cm². La surface au sommet de chaque protubérance est nécessairement faible de l'ordre de 1 mm².

Le second pli (20) est gaufré selon le type de motif représenté sur la figure 2. Ce motif est constitué d'éléments (21) de motif, ici représentant une fleur, couvrant une surface nettement plus importante que les éléments du premier motif. Cette surface peut être inscrite dans un polygone de surface comprise entre 2 et 6 cm². Les éléments (21), dans l'exemple représenté, sont répartis régulièrement sur le plan de la feuille dans deux directions, telles que sens marche et sens travers. En comparaison avec le premier motif, le nombre d'éléments (21) est beaucoup plus faible, de préférence il est inférieur à 2 000 par m², ce qui laisse un espacement entre deux éléments suffisants pour qu'au toucher on perçoive une portion de surface lisse.

Les éléments sont eux-mêmes constitués d'une pluralité de protubérances (22) rapprochées dont l'empreinte est linéaire. Ainsi le dessin des éléments (21) est défini par des portions de courbe. Dans l'exemple représenté les courbes sont fermées, accentuant l'effet de molleton obtenu par ce type de gaufrage.

On a représenté, sur la figure 3, la feuille avec les deux plis (10) et (20) superposés. Ils sont disposés de telle sorte que les protubérances (12) et (22) sont à l'intérieur de la feuille. On peut lier les deux plis l'un à l'autre de toute manière connue de l'homme de métier, telle que, par exemple, mécaniquement par moletage, c'est-à-dire en faisant passer la feuille entre deux molettes.

De préférence cependant, on lie les deux plis l'un à l'autre au moyen d'une substance adhésive interposée entre les sommets des protubérances des plis représentés qui viennent en contact. La substance adhésive est alors de préférence déposée sur les sommets des seconds éléments de motif et est avantageusement colorée afin d'en faire ressortir les détails.

Le procédé de fabrication d'une telle structure de feuille fait partie de l'état de la technique, et est en soi connu. Un premier cylindre de gaufrage a été gravé selon le premier motif avec des picots de forme adaptée aux protubérances (12) souhaitées. Un deuxième cylindre a été gravé selon le deuxième motif avec des picots de forme adaptée aux protubérances (22) à obtenir. Le procédé consiste à gaufrer séparément les deux plis entre les cylindres de gaufrage et des cylindres en caoutchouc puis à assembler les deux plis selon la technique pointes contre pointes, connue de l'homme de l'art, après avoir appliqué de la substance adhésive, de préférence à base aqueuse, sur les sommets de l'un des plis gaufrés au moyen d'un cylindre d'encollage.

On a réalisé des essais sur une machine pilote de faible laize et avec des cylindres de gaufrage de faible diamètre, afin de déterminer dans quelle mesure cette structure présente un gain d'épaisseur par rapport à une structure de feuille réalisée avec deux plis gaufrés selon le deuxième motif uniquement.

Sur cette machine pilote représentée schématiquement sur la figure 4, les cylindres gravés (CG) et caoutchouc (CC) avaient un diamètre de 100 mm et le revêtement des cylindres caoutchouc une dureté de 45 shA.

Les plis sont en ouate de cellulose, de qualité papier hygiénique, de poids 18 g/m² et dont l'épaisseur est de 0,19 mm pour 2 plis. L'épaisseur a été mesurée sur 12 plis et ramenée à 2 plis.

Un premier pli A est gaufré selon le motif de la figure 1 avec une densité de protubérances de 60 par cm². Il correspond à l'un des plis du papier toilette commercialisé par la Demanderesse sous la marque LOTUS.

Un deuxième pli B est gaufré selon le motif de la figure 2, avec 1700 éléments de motif de fleur par m², chaque fleur étant inscrite dans un rectangle de 4,5 cm², et l'épaisseur du trait marqué par les protubérances étant de 0,7 mm. Il correspond à l'un des plis du papier toilette commercialisé par la Demanderesse sous la marque LOTUS PETITE FLEUR

On a réalisé deux séries de feuilles - l'une avec un gaufrage des plis sous une pression spécifique de gaufrage PS1, l'autre sous une pression spécifique PS2, avec PS1 < PS2. Les valeurs de ces pressions dépendent de la nature du motif; elles étaient respectivement :
- PS1: 6 kg/cm² caoutchouc/motif A
4 kg/cm² caoutchouc/motif B
- PS2: 8 kg/cm² caoutchouc/motif A
5 kg/cm² caoutchouc/motif B

On a associé les plis, après avoir déposé une substance adhésive à base aqueuse sur le pli B, de la façon suivante :
I - Un pli A avec un pli B
II - 2 plis B
III -1 pli non gaufré avec un pli B

On a mesuré l'épaisseur des échantillons produits (On a mesuré l'épaisseur de 12 plis superposés et on a divisé le résultat par 6 ).

| Echantillon | Epaisseur en mm | |
|---|---|---|
| | **PS1** | **PS2** |
| I | 0.29 | 0.43 |
| II | 0.26 | 0.38 |
| III | 0.24 | 0.33 |

On constate que l'échantillon I présente une épaisseur supérieure à celle que l'échantillon II, avec un gain de 12 % au moins.

## Revendications

1. Feuille stratifiée constituée de deux plis au moins, d'ouate de cellulose ou autre nappe de fibres cellulosiques de grammage compris entre 10 et 40 g/m², gaufrés et assemblés de façon que les protubérances, définissant les motifs de gaufrage, soient disposées vers l'intérieur de la feuille et ménagent entre elles des cavités, les plis (10, 20) étant gaufrés selon des motifs de gaufrage différents, **caractérisé en ce qu'**un des plis (10), est gaufré selon un premier motif constitué de premières protubérances (12) de surface au sommet inférieure à 1 mm² et dont le nombre est au moins de 30 par cm², et, le second pli (20), est gaufré selon un deuxième motif composé d'éléments (21) de motif constitués de secondes protubérances (22) à sommet de forme linéaire lesdits éléments de motif occupant individuellement une surface de 2 à 6 cm² et étant espacés les uns des autres, le nombre desdits éléments (21) de motif étant inférieur à 2 000 par m².

2. Feuille selon la revendication précédente, **caractérisée en ce que** le premier motif est constitué d'au moins 40 protubérances (12) au cm².

3. Feuille selon l'une des revendications précédentes, **caractérisée en ce qu'**au moins l'une des deuxièmes protubérances (22) constituant les éléments (21) de motif du deuxième motif a un sommet de forme linéaire fermée.

4. Feuille selon l'une des revendications précédentes, **caractérisée en ce qu'**au moins l'une des deuxièmes protubérances (22) constituant les éléments (21) de motif du deuxième motif a un sommet de forme linéaire ouverte.

5. Feuille selon l'une des revendications précédentes, **caractérisée en ce que** lesdits deux plis sont liés l'un à l'autre par une substance adhésive interposée entre les sommets des premières et deuxièmes protubérances.

## Claims

1. Layered sheet consisting of at least two plies, of cellulose wadding or of another sheet of cellulose fibres, with a basis weight of between 10 and 40 g/m², which are embossed and assembled such that the projections, which define the embossing patterns, are disposed towards the interior of the sheet, and form cavities between one another, the plies (10, 20) being embossed according to different embossing patterns, **characterised in that** one of the plies (10) is embossed according to a first pattern, consisting of first surface projections (12) at the tip of less than 1 mm², and the number of which is at least 30 per cm², and the second ply (20) is embossed according to a second pattern, consisting of pattern elements (21) which comprise second projections (22) with a linear form at the tip, the said pattern elements occupying individually a surface area of 2 to 6 cm², and being spaced from one another, the number of the said pattern elements (21) being less than 2000 per m².

2. Sheet according to the preceding claim, **characterised in that** the first pattern consists of at least 40 projections (12) per cm².

3. Sheet according to either of the preceding claims, **characterised in that** at least one of the two projections (22), which constitute the pattern elements (21) of the second pattern, has a tip with a closed linear form.

4. Sheet according to any one of the preceding claims, **characterised in that** at least one of the second projections (22) which constitutes the pattern elements (21) of the second pattern has a tip with an open linear form.

5. Sheet according to any one of the preceding claims, **characterised in that** the said two plies are bonded to one another by an adhesive substance, which is interposed between the tips of the first and second projections.

## Patentansprüche

1. Mehrlagiger Bogen, der gebildet wird von mindestens zwei Lagen aus Zellulosewatte oder einem anderen Gebilde aus Zellulosefasern eines Flächengewichtes zwischen 10 und 40 g/m², welche solche geprägt und zusammengesetzt sind, dass die die Prägemotive bildenden Vorsprünge zur Innenseite des Bogens hin angeordnet sind und zwischen sich Hohlräume bilden, wobei die Lagen (10, 20) mit unterschiedlichen Prägemotiven geprägt sind, **dadurch gekennzeichnet, dass** eine der Lagen (10) entsprechend einem ersten Motiv geprägt ist, das von ersten Vorsprüngen (12) gebildet wird, deren Fläche am Scheitel kleiner als 1 mm² ist und deren Anzahl mindestens 30 pro cm² beträgt, und die zweite Lage (20) entsprechend einem zweiten Motiv geprägt ist, das aus Motivelementen (21) zusammengesetzt ist, welche von zweiten Vorsprüngen (22) mit einer linearen Form am Scheitel gebildet werden, wobei diese Motivelemente einzeln eine Fläche von 2 bis 6 cm einnehmen und zueinander beabstandet sind, wobei die Anzahl dieser Motivelemente (21) kleiner als 2000 pro m² ist.

2. Bogen nach dem vorhergehenden Anspruch, **dadurch gekennzeichnet, dass** das erste Motiv von mindestens 40 Vorsprüngen (12) pro cm² gebildet wird.

3. Bogen nach einem der vorhergehenden Ansprüche, **dadurch gekennzeichnet, dass** mindestens einer der zweiten Vorsprünge (22), die die Motivelemente (21) des zweiten Motivs bilden, einen Scheitel einer geschlossenen linearen Form hat.

4. Bogen nach einem der vorhergehenden Ansprüche, **dadurch gekennzeichnet, dass** mindestens einer der zweiten Vorsprünge (22), die die Motivelemente (21) des zweiten Motivs bilden, einen Scheitel einer offenen linearen Form hat.

5. Bogen nach einem der vorhergehenden Ansprüche, **dadurch gekennzeichnet, dass** die beiden Lagen miteinander durch einen Klebstoff verbunden sind, der zwischen den Scheiteln der ersten und zweiten Vorsprünge angeordnet ist.
